# FASCICULE DE BREVET EUROPEEN

(11) **EP 0 957 653 B1**
(45) Date de publication et mention de la délivrance du brevet: **02.08.2006**
(21) Numéro de dépôt: 99401109.6
(22) Date de dépôt: 06.05.1999
(51) Int. Cl.: H04Q 7/38, H04Q 7/36

(54) **Système de radiocommunications mobiles incluant un système public et au moins un système privé**
Mobil-Kommunikationssystem, das ein öffentliches System und mindestens ein privates System aufweist
Mobile communications system comprising a public system and at least a private system

(30) Priorité: 12.05.1998 FR 9805974
(43) Date de publication de la demande: 17.11.1999
(73) Titulaire: ALCATEL, 75008 Paris (FR)
(72) Inventeur: Roberts, Michael, 92200 Neuilly Sur Seine (FR); Cruchant, Laurent, 75007 Paris (FR); Courau, François, 92190 Meudon (FR)
(74) Mandataire: El Manouni, Josiane

(56) Documents cités:
- EP-A- 0 802 692
- WO-A-97/36437
- US-A- 5 428 668

## Description

La présente invention concerne d'une manière générale les systèmes de radiocommunications mobiles.

On connaît différents types de systèmes de radiocommunications mobiles, qui se différencient essentiellement par leur couverture géographique, par les services qu'ils proposent, et par le coût de ces services.

On connaît ainsi les systèmes publics, en général des systèmes cellulaires, qui ont une couverture géographique relativement large (typiquement une région, un pays, ou un continent), autorisant une mobilité relativement grande, mais impliquant des coûts de communication relativement élevés.

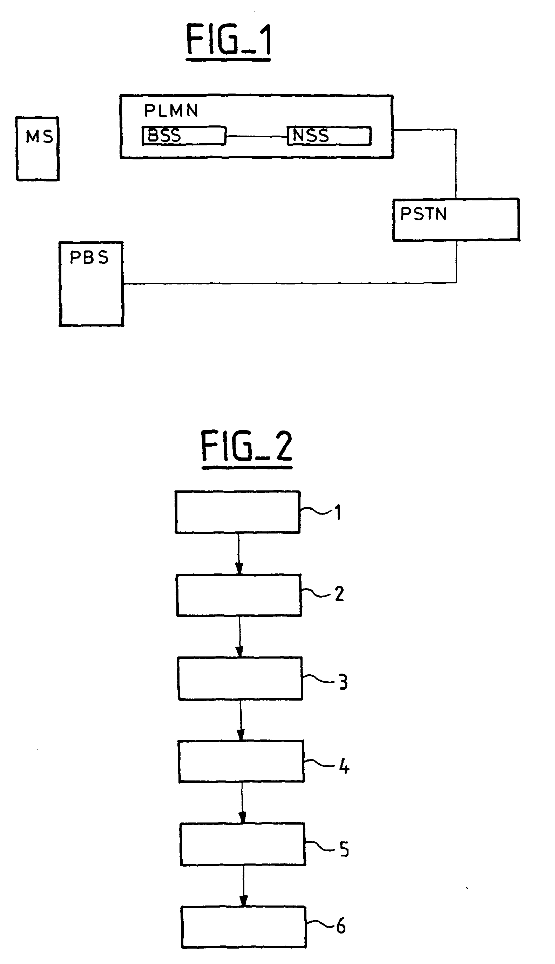

Dans ces systèmes publics cellulaires, et comme illustré sur la figure 1, des stations mobiles notées MS (pour "Mobile Station") sont en relation avec un réseau cellulaire noté PLMN (pour : "Public Land Mobile Network") relié à des réseaux extérieurs tel que notamment le réseau PSTN (pour "Public Switched Telephone Network") et comportant, de manière connue, un sous-système de stations de base noté BSS (pour "Base Station Subsystem") et un sous-système de réseau et de commutation noté NSS (pour "Network Sub-System"). Pour une description plus complète d'un système cellulaire tel que notamment le système GSM (pour "Global System for Mobile communications"), on pourra se référer par exemple au livre de M. MOULY et M.B. PAUTET, intitulé "The GSM System for Mobile Communications" (Palaiseau, France, 1992, ISBN:2-9507190-07-7).

On connaît en outre les systèmes privés, qui ont une couverture géographique relativement plus étroite, autorisant une mobilité relativement plus faible, mais impliquant aussi des coûts de communication relativement plus faibles. Ces systèmes privés peuvent eux-mêmes être soit des systèmes dits sans fil, ou "cordless" en anglais, typiquement réservés à un usage résidentiel, ou des systèmes, typiquement réservés à un usage de bureau, notamment formés de mini-cellules, de taille très inférieure à celles des systèmes publics.

Dans ces systèmes privés, et comme illustré également sur la figure 1, des stations mobiles notées également MS sont en relation avec des stations de base privées notées PBS (pour "Private Base Station"), elle-même reliées directement à un réseau extérieur tel que notamment le réseau PSTN.

Un besoin existe de pouvoir, avec une même station mobile, accéder à l'un ou l'autre de tels systèmes, public ou privé, soit au choix de l'utilisateur, soit, de façon plus automatique, par sélection par les systèmes eux-mêmes. Des stations mobiles dites multi-mode ont ainsi été développées, qui peuvent être plus ou moins complexes selon que certaines fonctions peuvent ou non être mises en commun entre les modes public et privé, et aussi suivant que les stations de base privées sont plus ou moins complexes.

Une simplification importante des stations mobiles peut être obtenue en prévoyant une bande de fréquences commune à ces divers systèmes.

Un problème se pose cependant dans ce cas, qui est que si les mécanismes d'allocation de ressources radio dans ces divers systèmes ne sont pas coordonnés, des interférences sont susceptibles de se produire entre systèmes dans leur zone de recouvrement, et donc de nuire à la qualité des communications.

On rappelle que dans un système public cellulaire tel que celui illustré sur la figure 1, c'est l'entité BSS du réseau PLMN qui contrôle l'allocation de ressources radio. Plus précisément le BSS sélectionne ces ressources dans un ensemble de ressources attribuées (suivant les principes de répartition de ressources entre cellules dans un système cellulaire), à une cellule donnée, sélectionnée ou resélectionnée en coopération avec la station mobile MS.

Au contraire, dans un système privé, les ressources radio sont déterminées, pour le cas des systèmes sans fil (ou "Cordless") de façon non centralisée, au niveau de chaque couple station mobile-station de base, et en mettant éventuellement en oeuvre des techniques telle que la technique de saut de fréquences (ou "frequency hopping" en anglais) pour limiter les interférences à l'intérieur de ce système; pour le cas de systèmes privés autres que les systèmes sans fil (ou "Cordless"), les ressources radio sont déterminées de façon plus centralisée, au niveau de la station de base privée, mais le problème évoqué plus haut des interférences entre systèmes n'est pas résolu.

Une solution à ce problème d'interférences entre systèmes serait de réserver à chacun de ces systèmes une portion distincte de ladite bande de fréquences commune, ou, pour une meilleure efficacité spectrale, de réserver, dans chaque cellule du système public cellulaire, pour un système privé localisé dans cette cellule, un ensemble de fréquences non attribuées dans le système public à cette cellule et aux cellules adjacentes, mais qui peuvent être réutilisées dans des cellules plus éloignées.

Une telle répartition fixe n'est cependant pas optimale pour le cas où des reconfigurations de systèmes s'avèrent nécessaires, et en outre ne constitue pas un moyen efficace de partage de ressources.

Une meilleure solution consiste à intégrer la gestion des ressources du ou des systèmes privés à celle du système public, c'est-à-dire à gérer et allouer dynamiquement les ressources radio pour les divers modes de fonctionnement possibles, privé ou public, des stations mobiles.

Une telle solution a en outre pour avantage de permettre également une allocation centralisée des ressources radio dans un système privé constitué par un système sans fil (ou "Cordless"), et donc d'éviter plus efficacement les interférences à l'intérieur d'un tel système.

Une telle solution pose cependant à son tour le problème de trouver un meilleur moyen d'informer les stations mobiles des ressources qui leur sont ainsi allouées dynamiquement, en mode privé.

Il peut ainsi être envisagé de transmettre une telle information aux stations de base privées, via le réseau PSTN. Une telle solution à cependant pour inconvénient d'être relativement complexe à mettre en oeuvre.

Il peut aussi être envisagé de transmettre une celle information aux stations mobiles sur un canal commun (ou canal de diffusion) du système public, tel que pour le système GSM le canal BCCH (pour "Broadcast Control Channel") porté par une fréquence dite fréquence balise, et utilisé pour diffuser des informations générales propres à ce système.

Une telle solution se heurte cependant au fait que de tels canaux de diffusion sont déjà pour la plupart réservés pour d'autres utilisations. Par ailleurs, cela est susceptible d'introduire des retards dans la mise en oeuvre des algorithmes de sélection ou de resélection de cellule par les stations mobiles, d'autant que ces canaux de diffusion ont des cycles d'occurrence relativement faibles dans les structures de trames et de multitrames utilisés pour les véhiculer, d'où une dégradation de la qualité de service.

Le document EP 0 802 692 concerne, dans un système incluant un système public et un système privé opérant dans la bande de fréquences du système public, la transmission, par un contrôleur du système public, à la station de base privée, d'informations de contrôle, ces informations de contrôle pouvant inclure des paramètres d'exploitation de la station de base privée, incluant des données de contrôle pour assigner une bande de fréquences à la station privée et/ou pour contrôler les niveaux de puissance pour la station de base privée. La solution proposée est d'utiliser la station mobile pour transmettre ces informations de contrôle, du contrôleur de système du système public à la station de base privée, c'est-à-dire de procéder en deux temps : dans un premier temps (lorsque la station mobile opère dans le système public), le contrôleur du système public transmet ces informations de contrôle à la station mobile, et dans un deuxième temps (lorsque la station mobile opère dans le système privé) la station mobile (ayant mémorisé ces informations) les re-transmet à la station de base privée. En outre, il est proposé de transmettre de telles informations aux stations mobiles au moyen du service SMS ("short Message Service"), ce qui a notamment pour inconvénient de nécessiter une allocation de ressources spécifiques pour une telle transmission, d'où notamment une utilisation non optimale des ressources radio disponibles.

La présente invention a notamment pour but d'éviter ces différents inconvénients.

La présente invention a ainsi pour objet un système de radiocommunications mobiles incluant un système public et au moins un système privé, et des stations mobiles dites multi-mode aptes à fonctionner dans l'un ou l'autre de ces systèmes, et dans lequel la gestion des ressources radio dudit au moins un système privé est intégrée à celle dudit système public, ce système étant essentiellement caractérisé en ce qu'il comporte des moyens pour ré-utiliser un canal de signalisation dédié alloué à une station mobile en mode public, pour la transmission d' informations de ressources radio allouées à cette station mobile en mode privé.

La présente invention a également pour objet une station mobile, et une entité pour système cellulaire de radiocommunications mobiles (notamment BSS pour un réseau tel que le réseau GSM) utilisables dans un tel système.

D'autres objets et caractéristiques de la présente invention apparaîtront à la lecture de la description suivante d'un exemple de réalisation, ladite description étant faite en relation avec les dessins ci-annexés dans lesquels:
- la figure 1 est un schéma destiné à illustrer une station mobile multi-mode apte à fonctionner en mode public ou en mode privé dans un système de radiocommunications mobiles incluant un système public et au moins un système privé,
- la figure 2 est un diagramme destiné à illustrer un exemple de fonctionnement d'un système suivant l'invention,
- la figure 3 est un schéma destiné à illustrer le type de moyens à prévoir dans une station mobile, dans un système suivant l'invention,
- la figure 4 est un schéma destiné à illustrer le type de moyens à prévoir, dans une entité de système cellulaire de radiocommunications mobiles (notamment BSS pour un système tel que le système GSM), dans un système suivant l'invention.

La présente invention a donc pour objet un système de radiocommunications mobiles incluant un système public et au moins un système privé, et des stations mobiles dites multi-mode aptes à fonctionner dans l'un ou l'autre de ces systèmes, et dans lequel la gestion des ressources radio dudit au moins un système privé est intégrée à celle dudit système public.

Suivant l'invention, ce système comporte des moyens pour ré-utiliser un canal de signalisation dédié alloué à une station mobile en mode public, pour la transmission d'informations de ressources radio allouées à cette station mobile en mode privé.

D'une manière générale le terme de station mobile multi-mode est ici utilisé pour recouvrir tous les niveaux de complexité possibles pour une telle station mobile, depuis le cas où cette station mobile n'est que l'addition d'une station mobile destinée à fonctionner dans un système public et d'une station mobile destinée à fonctionner dans un système privé, jusqu'au cas où une telle station mobile multi-mode peut être constituée par une station mobile destinée à fonctionner dans un système public (la station de base privée associée étant alors modifiée, par rapport à une station de base privée associée à une station mobile destinée à fonctionner dans un système privé, pour y intégrer des fonctions destinées à reproduire, vis-à-vis de cette station mobile, des fonctions du réseau public cellulaire).

En outre, lesdites informations de ressources radio allouées à la station mobile en mode privé peuvent comporter, outre les ressources radio elles-mêmes, des paramètres radio associés tels que notamment le niveau de puissance d'émission (le contrôle de niveau de puissance d'émission permettant également, de manière connue, de réduire les interférences).

En outre, dans le cas de système privé utilisant la technique de saut de fréquence, lesdites ressources allouées comportent, non pas une seule fréquence, mais un jeu de fréquences.

En outre, lesdites informations de ressources radio allouées à la station mobile en mode privé peuvent aussi comporter une fréquence balise à utiliser par la station de base privée associée à cette station mobile, pour le cas où le protocole de communication entre station mobile et stsation de base comporte l'envoi d'une telle fréquence balise par la station de base.

A titre d'exemple, dans un système cellulaire tel que le système GSM, lesdites informations de ressources radio allouées à une station mobile en mode privé peuvent être transmises dans un canal de signalisation dédié appelé SDCCH (pour "Stand alone Dedicated Control Channel"), utilisé pour transmettre des informations de signalisation en dehors d'une communication, par exemple au cours de procédures de gestion de mobilité des utilsateurs, ou lors de phases d'établissement ou de relâchement d'appels.

Ainsi, dans l'exemple illustré sur la figure 2, lesdites informations sont transmises au cours d'une procédure particulière de gestion de mobilité des utilisateurs, constituée par une procédure de détachement de la station mobile du système public, déclenchée par une commutation du mode public vers le mode privé.

Le procédé illustré sur la figure 2 comporte ainsi, à partir d'un état initial 1 correspondant à un fonctionnement en mode public, une étape 2 au cours de laquelle on détecte si le mode privé est sélectionné.

D'une manière générale, le mode privé peut être soit sélectionné de façon manuelle par l'utilisateur lui-même, soit déterminé de façon automatique , notamment par détection du fait que la station mobile est sous couverture de la station de base privée associée.

La sélection du mode privé entraîne la mise en oeuvre d'une procédure de détachement du système public (étape 3).

La procédure de détachement du système cellulaire permet essentiellement d'éviter de continuer à transmettre inutilement des messages de signalisation à une station mobile sur des canaux de signalisation communs du système public (tels que notamment, dans le système GSM, des canaux PCH, pour "Paging Channels"), alors que cette station mobile ne fonctionne plus en mode public. Une telle procédure peut être du même type que celle, connue sous le nom de "IMSI Detach", utilisée dans les systèmes publics tels que le système GSM pour éviter de continuer à transmettre inutilement de tels messages de signalisation lorsqu'une station mobile a été désactivée. Simplement, elle est ici déclenchée non par la désactivation de la station mobile, mais par la commutation de la station mobile du mode public vers le mode privé.

Suivant l'invention, dans cet exemple l'étape 3 comporte en outre la transmission, par le réseau public, à la station mobile, des ressources radio qui lui sont allouées en mode privé.

Avantageusement, ces informations sont transmises dans un message de relâchement de ressources allouées pour ladite procédure de détachement; notamment, dans un système cellulaire tel que le système GSM, un tel message peut être constitué par un message dit de "Channel Release".

La sélection du mode privé entraîne en outre une procédure d'enregistrement de la station mobile dans le système privé (étape 4). Une telle procédure peut être de type connu, déjà utilisé dans de tels systèmes privés, et donc non rappelé ici.

Le diagramme illustré sur la figure 2 comporte en outre une étape 5 au cours de laquelle la station mobile communique à son tour à la station de base associée lesdites informations de ressources radio allouées pour le mode privé.

Le diagramme illustré sur la figure 2 comporte enfin une étape 6 représentant le fonctionnement de la station mobile en mode privé.

D'autres exemples de réalisation seraient bien entendu possibles. Lesdites informations de ressources radio allouées pour le mode privé pourraient ainsi être transmises au cours de procédures autres qu'une telle procédure de détachement du système public, notamment:
- une procédure d'enregistrement dans le système public,
- une procédure de mise à jour de localisation dans le système public,
- une procédure d'établissement ou de relâchement d'appel en mode public.

La procédure décrite plus haut a cependant pour avantage, par rapport à ces dernières, de communiquer lesdites informations de ressources radio à la station mobile au plus près du moment où celle-ci est susceptible de les utiliser.

Lesdites informations de ressources radio allouées pour le mode non cellulaire pourraient aussi, bien que cela soit également moins avantageux, être transmises dans des canux de signalisation dédiés tels que, pour le système GSM par exemple, les canaux SACCH (pour "Slow Associated Control Channel"), ou FACCH (pour "Fast Associated Control Channel"), utilsés pour transmettre des informations de signalisation au cours d'une communication en mode public.

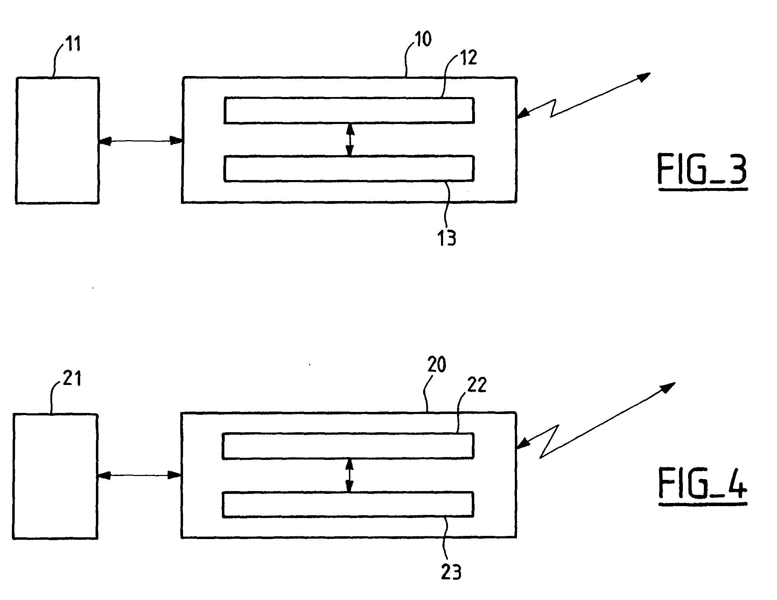

La figure 3 est un schéma destiné à illustrer le type de moyens à prévoir dans une station mobile, dans un système suivant l'invention.

Comme rappelé sur la figure 3, de manière connue, une station mobile comporte des moyens 10 dits d'interface air, permettant:
- d'une part de mettre des informations issues de moyens d'interface homme-machine 11, dans une forme admissible pour leur transmission sur l'interface-air,
- d'autre part de restituer des informations reçues sur l'interface-air, pour transmission auxdits moyens d'interface homme-machine 11.

Les moyens 10 d'interface-air comportent eux-mêmes, de manière connue, des moyens d'émission-réception 12, incluant des fonction de traitement en bande de base et des fonctions radioélectriques, et des moyens de commande 13.

Lesdits moyens de commande 13 permettent notamment d'émettre et de recevoir les différents messages de signalisation échangés entre cette station mobile et le système public, dans les différentes procédures, ou protocoles, prévus pour le fonctionnement en mode public. Notamment, dans l'exemple de fonctionnement illustré sur la figure 2), lesdits moyens de commande 13 permettent d'émettre et de recevoir les différents messages de signalisation échangés entre station mobile et réseau public cellulaire dans le cadre d'une procédure de communication correspondant à cet exemple de fonctionnement.

Suivant l'invention, lesdits moyens de commande 13 comportent en outre des moyens pour recevoir, sur un canal de signalisation dédié, alloué à cette station mobile en mode public, lesdites informations de ressources radio allouées pour le mode privé, et pour configurer en conséquence les moyens d'émission-réception 12 pour ce mode privé.

La réalisation particulière de tels moyens ne présentant pas de difficulté particulière pour l'homme du métier, de tels moyens ne nécessitent pas d'être décrits ici de manière autrement plus détaillée que par leur fonction.

La figure 4 est un schéma destiné à illustrer le type de moyens à prévoir, dans une entité de système cellulaire de radiocommunications mobiles (notamment BSS pour un système tel que le système GSM), dans un système suivant l'invention.

Comme rappelé sur la figure 4, de manière connue une entité telle que l'entité BSS comporte des moyens 20 dits d'interface-air permettant:
- d'une part de mettre des informations issues d'une entité 21 dite de niveau supérieur du système considéré (en l'occurrence l'entité NSS), dans une forme admissible pour leur transmission sur l'interface-air,
- d'autre part de restituer des informations reçues sur l'interface-air, pour transmission à ladite entité de niveau supérieur 21.

De même que décrit précédemment pour la station mobile, les moyens 20 d'interface-air comportent eux-mêmes classiquement des moyens d'émission-réception 22, incluant des fonction de traitement en bande de base et des fonctions radioélectriques, et des moyens de commande 23.

Lesdits moyens de commande 23 permettent notamment d'émettre et de recevoir les différents messages de signalisation échangés entre cette station mobile et le réseau public cellulaire, dans les différentes procédures, ou protocoles, prévus pour le fonctionnement en mode public. Notamment, dans l'exemple de fonctionnement illustré sur la figure 2, lesdits moyens de commande 23 permettent d'émettre et de recevoir les différents messages de signalisation échangés entre station mobile et réseau public cellulaire dans le cadre d'une procédure de communication correspondant à cet exemple de fonctionnement.

Suivant l'invention, lesdits moyens de commande 23 comportent des moyens pour émettre, sur un canal de signalisation dédié, alloué à une station mobile en mode public, lesdites informations de ressources radio allouées à cette station mobile en mode privé.

La réalisation particulière de tels moyens ne présentant pas non plus de difficulté particulière pour l'homme du métier, de tels moyens ne nécessitent pas non plus d'être décrits ici de manière autrement plus détaillée que par leur fonction.

## Revendications

1. Système de radiocommunications mobiles incluant un système public (MS, PLMN) et au moins un système privé (MS, PBS), et des stations mobiles (MS) dites multi-mode aptes à fonctionner dans l'un ou l'autre de ces systèmes, et dans lequel la gestion des ressources radio dudit au moins un système privé est intégrée à celle dudit système public, ce système étant **caractérisé en ce qu'**il comporte des moyens (13, 23) pour ré-utiliser un canal de signalisation dédié alloué à une station mobile en mode public, pour la transmission d'informations de ressources radio allouées à cette station mobile en mode privé.

2. Système selon la revendication 1, **caractérisé en ce que** lesdites informations sont transmises au cours d'une procédure de détachement de la station mobile du système public.

3. Système selon la revendication 2, **caractérisé en ce que** lesdites informations transmises au cours d'une procédure de détachement de la station mobile du système public sont transmises dans un message de relâchement de ressources allouées pour ladite procédure de détachement.

4. Système selon la revendication 1, **caractérisé en ce que** lesdites informations sont transmises au cours d'une procédure d'enregistrement de ladite station mobile dans le système public.

5. Système selon la revendication 1, **caractérisé en ce que** lesdites informations sont transmises au cours d'une procédure de mise à jour de localisation de ladite station mobile dans le système public.

6. Système selon la revendication 1, **caractérisé en ce que** lesdites informations sont transmises au cours d'une procédure d'établissement ou de relâchement d'appel dans le système public.

7. Système selon l'une des revendications 1 à 6, **caractérisé en ce que** lesdites informations comportent, outre des ressources radio allouées à ladite station mobile en mode privé, des paramètres radio associés, notamment un niveau de puissance d'émission.

8. Station mobile pour système de radiocommunications mobiles incluant un système public (MS, PLMN) et au moins un système privé (MS, PBS), ladite station mobile comportant des moyens d'émission-réception (12) et des moyens de commande (13) permettant d'émettre et de recevoir les différents messages de signalisation échangés entre station mobile et réseau public dans les différentes procédures prévues pour le fonctionnement dans ce réseau, ladite station mobile étant **caractérisée en ce que** lesdits moyens de commande (13) comportent des moyens pour recevoir , sur un canal de signalisation dédié, alloué à cette station mobile en mode public, des informations de ressources radio allouées à cette station mobile en mode privé.

9. Station mobile selon la revendication 8, **caractérisée en ce que** lesdites informations sont transmises au cours d'une procédure de détachement de la station mobile du système public.

10. Station mobile selon la revendication 9, **caractérisée en ce que** lesdites informations transmises au cours d'une procédure de détachement de la station mobile du système public sont transmises dans un message de relâchement de ressources allouées pour ladite procédure de détachement.

11. Station mobile selon la revendication 8, **caractérisée en ce que** lesdites informations sont transmises au cours d'une procédure d'enregistrement de ladite station mobile dans le système public.

12. Station mobile selon la revendication 8, **caractérisée en ce que** lesdites informations sont transmises au cours d'une procédure de mise à jour de localisation de ladite station mobile dans le système public.

13. Station mobile selon la revendication 8, **caractérisée en ce que** lesdites informations sont transmises au cours d'une procédure d'établissement ou de relâchement d'appel dans le système public.

14. Station mobile selon l'une des revendications 8 à 13, **caractérisée en ce que** lesdites informations comportent, outre des ressources radio allouées à ladite station mobile en mode privé, des paramètres radio associés, notamment un niveau de puissance d'émission.

15. Entité pour réseau public de radiocommunications mobiles, pour système de radiocommunications mobiles incluant un système public (MS, PLMN) et au moins un système privé (MS, PBS), ladite entité comportant des moyens d'émission-réception (22) et des moyens de commande (23) permettant d'émettre et de recevoir les différents messages de signalisation échangés entre station mobile et réseau public dans les différentes procédures prévues pour le fonctionnement dans ce réseau, ladite entité étant **caractérisée en ce que** lesdits moyens de commande (23) comportent des moyens pour émettre, sur un canal de signalisation dédié, alloué à une station mobile en mode public, des informations de ressources radio allouées à cette station mobile en mode privé.

16. Entité selon la revendication 15, **caractérisée en ce que** lesdites informations sont transmises au cours d'une procédure de détachement de la station mobile du système public.

17. Entité selon la revendication 16, **caractérisée en ce que** lesdites informations transmises au cours d'une procédure de détachement de la station mobile du système public sont transmises dans un message de relâchement de ressources allouées pour ladite procédure de détachement.

18. Entité selon la revendication 15, **caractérisée en ce que** lesdites informations sont transmises au cours d'une procédure d'enregistrement de ladite station mobile dans le système public.

19. Entité selon la revendication 15, **caractérisée en ce que** lesdites informations sont transmises au cours d'une procédure de mise à jour de localisation de ladite station mobile dans le système public.

20. Entité selon la revendication 15, **caractérisée en ce que** lesdites informations sont transmises au cours d'une procédure d'établissement ou de relâchement d'appel dans le système public.

21. Entité selon l'une des revendications 15 à 20, **caractérisée en ce que** lesdites informations comportent, outre des ressources radio allouées à ladite station mobile en mode privé, des paramètres radio associés, notamment un niveau de puissance d'émission.

## Claims

1. A mobile radio communications system including a public system (MS, PLMN) and at least one private system (MS, PBS), and "multimode" mobile stations (MS) suitable for operating in either of said systems, and in which the management of the radio resources of said at least one private system is integrated in that of said public system, the mobile radio communications system being **characterized in that** it includes means (13, 23) for reusing a dedicated signaling channel allocated to a mobile station in public mode for conveying information about radio resources allocated to said mobile station in private mode.

2. A system according to claim 1, **characterized in that** said information is conveyed during a procedure for detaching the mobile station from the public system.

3. A system according to claim 2, **characterized in that** said information conveyed during a procedure for detaching the mobile station from the public system is conveyed in a message for releasing resources allocated for said detachment procedure.

4. A system according to claim 1, **characterized in that** said information is conveyed during a procedure for registering said mobile station in the public system.

5. A system according to claim 1, **characterized in that** said information is conveyed during a procedure for updating the location of said mobile station in the public system.

6. A system according to claim 1, **characterized in that** said information is conveyed during a procedure for setting up or clearing down a call in the public system.

7. A system according to any one of claims 1 to 6, **characterized in that**, in addition to the radio resources allocated to said mobile station in private mode, said information includes associated radio parameters, in particular concerning transmission power level.

8. A mobile station for a mobile radio communications system including a public system (MS, PLMN) and at least one private system (MS, PBS), said mobile station including transceiver means (12) and control means (13) making it possible to transmit and to receive the various signaling messages exchanged between a mobile station and a public network in the various procedures provided for operating in said network, said mobile station being **characterized in that** said control means (13) include means for receiving, over a dedicated signaling channel allocated to the mobile station in public mode, information about radio resources allocated to said mobile station in private mode.

9. A mobile station according to claim 8, **characterized in that** said information is conveyed during a procedure for detaching the mobile station from the public system.

10. A mobile station according to claim 9, **characterized in that** said information conveyed during a procedure for detaching the mobile station from the public system is conveyed in a message for releasing resources allocated for said detachment procedure.

11. A mobile station according to claim 8, **characterized in that** said information is conveyed during a procedure for registering said mobile station in the public system.

12. A mobile station according to claim 8, **characterized in that** said information is conveyed during a procedure for updating the location of said mobile station in the public system.

13. A mobile station according to claim 8, **characterized in that** said information is conveyed during a procedure for setting up or clearing down a call in the public system.

14. A mobile station according to any one of claims 8 to 13, **characterized in that**, in addition to the radio resources allocated to said mobile station in private mode, said information includes associated radio parameters, in particular concerning transmission power level.

15. An entity for a mobile radio communications public network for a mobile radio communications system including a public system (MS, PLMN) and at least one private system (MS, PBS), said entity including transceiver means (22) and control means (23) making it possible to transmit and to receive the various signaling messages exchanged between a mobile station and a public network in the various procedures provided for operating in said network, said entity being **characterized in that** said control means (23) include means for transmitting, over a dedicated signaling channel allocated to a mobile station in public mode, information about radio resources allocated to said mobile station in private mode.

16. An entity according to claim 15, **characterized in that** said information is conveyed during a procedure for detaching the mobile station from the public system.

17. An entity according to claim 16, **characterized in that** said information conveyed during a procedure for detaching the mobile station from the public system is conveyed in a message for releasing resources allocated for said detachment procedure.

18. An entity according to claim 15, **characterized in that** said information is conveyed during a procedure for registering said mobile station in the public system.

19. An entity according to claim 15, **characterized in that** said information is conveyed during a procedure for updating the location of said mobile station in the public system.

20. An entity according to claim 15, **characterized in that** said information is conveyed during a procedure for setting up or clearing down a call in the public system.

21. An entity according to any one of claims 15 to 20, **characterized in that**, in addition to the radio resources allocated to said mobile station in private mode, said information includes associated radio parameters, in particular concerning transmission power level.

## Patentansprüche

1. Mobilfunksystem, das ein öffentliches System (MS, PLMN) und mindestens ein privates System (MS, PBS) und so genannte Mehrmodus-Mobilstationen (MS) einschließt, die sowohl in dem einen als auch in dem anderen dieser Systeme funktionieren können, und in dem die Verwaltung der Funkressourcen dieses mindestens einen privaten Systems in die Verwaltung dieses öffentlichen Systems integriert ist, wobei dieses System **dadurch gekennzeichnet ist, dass** es Mittel (13, 23) beinhaltet, um einen dedizierten Signalisierungskanal, der einer Mobilstation in der öffentlichen Betriebsart zugeteilt ist, für die Übertragung von Informationen zu Funkressourcen wieder zu verwenden, die dieser Mobilstation in der privaten Betriebsweise zugeteilt sind.

2. System gemäß Anspruch 1, **dadurch gekennzeichnet, dass** diese Informationen im Rahmen eines Verfahrens zur Trennung der Mobilstation vom öffentlichen System übertragen werden.

3. System gemäß Anspruch 2, **dadurch gekennzeichnet, dass** diese im Lauf eines Verfahrens zur Trennung der Mobilstation vom öffentlichen Netz übertragenen Informationen in einer Meldung zur Freigabe von Ressourcen übertragen werden, die für dieses Trennverfahren zugeteilt sind.

4. System gemäß Anspruch 1, **dadurch gekennzeichnet, dass** diese Informationen im Rahmen eines Verfahrens zur Registrierung dieser Mobilstation im öffentlichen System übertragen werden.

5. System gemäß Anspruch 1, **dadurch gekennzeichnet, dass** diese Informationen im Rahmen eines Verfahrens zur Lokalisierungsaktualisierung dieser Mobilstation im öffentlichen System übertragen werden.

6. System gemäß Anspruch 1, **dadurch gekennzeichnet, dass** diese Informationen im Rahmen eines Verfahrens zum Verbindungsaufbau oder zur Verbindungsfreigabe im öffentlichen System übertragen werden.

7. System gemäß einem der Ansprüche 1 bis 6, **dadurch gekennzeichnet, dass** diese Informationen neben den dieser Mobilstation in der privaten Betriebsweise zugewiesenen Funkressourcen damit zusammenhängende Funkparameter beinhalten, insbesondere einen Sendeleistungspegel.

8. Mobilstation für Mobilfunksystem, das ein öffentliches System (MS, PLMN) und mindestens ein privates System (MS, PBS) einschließt, wobei diese Mobilstation Mittel zum Senden / Empfangen (12) und Mittel zur Steuerung (13) einschließt, die es ermöglichen, die verschiedenen Signalisierungsmeldungen, die zwischen Mobilstation und öffentlichem Netz in den verschiedenen für den Betrieb in diesem Netz vorgesehenen Verfahren ausgetauscht werden, zu senden und zu empfangen, wobei diese Mobilstation **dadurch gekennzeichnet ist, dass** diese Mittel zur Steuerung (13) Mittel enthalten, um auf einem dedizierten Signalisierungskanal, der dieser Mobilstation in der öffentlichen Betriebsart zugeteilt ist, Informationen zur Funkressourcen zu empfangen, die dieser Mobilstation in der privaten Betriebsweise zugeteilt sind.

9. Mobilstation gemäß Anspruch 8, **dadurch gekennzeichnet, dass** diese Informationen im Lauf eines Verfahrens zur Trennung der Mobilstation vom öffentlichen System übertragen werden.

10. Mobilstation gemäß Anspruch 9, **dadurch gekennzeichnet, dass** diese im Lauf eines Verfahrens zur Trennung der Mobilstation vom öffentlichen System übertragenen Informationen in einer Meldung zur Freigabe von Ressourcen übertragen werden, die für dieses Verfahren zur Trennung zugeteilt sind.

11. Mobilstation gemäß Anspruch 8, **dadurch gekennzeichnet, dass** diese Informationen im Lauf eines Verfahrens zur Registrierung dieser Mobilstation im öffentlichen System übertragen werden.

12. Mobilstation gemäß Anspruch 8, **dadurch gekennzeichnet, dass** diese Informationen im Lauf eines Verfahrens zur Lokalisierungsaktualisierung dieser Mobilstation im öffentlichen System übertragen werden.

13. Mobilstation gemäß Anspruch 8, **dadurch gekennzeichnet, dass** diese Informationen im Lauf eines Verfahrens zum Verbindungsaufbau oder zur Verbindungsfreigabe im öffentlichen System übertragen werden.

14. Mobilstation gemäß einem der Ansprüche 8 bis 13, **dadurch gekennzeichnet, dass** diese Informationen neben den dieser Mobilstation in der privaten Betriebsart zugeteilten Funkressourcen damit zusammenhängende Funkparameter enthalten, insbesondere einen Sendeleistungspegel.

15. Instanz für öffentliches Mobilfunknetz, für Mobilfunksystem, das ein öffentliches System (MS, PLMN) und mindestens ein privates System (MS, PBS) einschließt, wobei diese Instanz Mittel zum Senden / Empfangen (22) und Mittel zur Steuerung (23) beinhaltet, die es ermöglichen, die verschiedenen Signalisierungsmeldungen, die zwischen Mobilstation und öffentlichem Netz in den verschiedenen für den Betrieb in diesem Netz vorgesehenen Verfahren ausgetauscht werden, zu senden und zu empfangen, wobei diese Instanz **dadurch gekennzeichnet ist, dass** diese Mittel zur Steuerung (23) Mittel enthalten, um auf einem dedizierten Signalisierungskanal, der einer Mobilstation in der öffentlichen Betriebsart zugeteilt ist, Informationen zur Funkressourcen zu senden, die dieser Mobilstation in der privaten Betriebsweise zugeteilt sind.

16. Instanz gemäß Anspruch 15, **dadurch gekennzeichnet, dass** diese Informationen im Lauf eines Verfahrens zur Trennung der Mobilstation vom öffentlichen System übertragen werden.

17. Instanz gemäß Anspruch 16, **dadurch gekennzeichnet, dass** diese im Lauf eines Verfahrens zur Trennung der Mobilstation vom öffentlichen System übertragenen Informationen in einer Meldung zur Freigabe von Ressourcen übertragen werden, die für dieses Verfahren zur Trennung zugeteilt sind.

18. Instanz gemäß Anspruch 15, **dadurch gekennzeichnet, dass** diese Informationen im Lauf eines Verfahrens zur Registrierung dieser Mobilstation im öffentlichen System übertragen werden.

19. Instanz gemäß Anspruch 15, **dadurch gekennzeichnet, dass** diese Informationen im Lauf eines Verfahrens zur Lokalisierungsaktualisierung dieser Mobilstation im öffentlichen System übertragen werden.

20. Instanz gemäß Anspruch 15, **dadurch gekennzeichnet, dass** diese Informationen im Lauf eines Verfahrens zum Verbindungsaufbau oder zur Verbindungsfreigabe im öffentlichen System übertragen werden.

21. Instanz gemäß einem der Ansprüche 15 bis 20, **dadurch gekennzeichnet, dass** diese Informationen neben den dieser Mobilstation in der privaten Betriebsweise zugeteilten Funkressourcen damit zusammenhängende Funkparameter enthalten, insbesondere einen Sendeleistungspegel.
